# EUROPÄISCHE PATENTSCHRIFT

(11) **EP 3 319 449 B1**
(45) Veröffentlichungstag und Bekanntmachung des Hinweises auf die Patenterteilung: **27.11.2019**
(21) Anmeldenummer: 16738704.2
(22) Anmeldetag: 04.07.2016
(51) Int. Cl.: A21C 11/16, A21C 14/00, A23P 30/20

(54) **HEIZVORRICHTUNG FÜR EINEN NAHRUNGSMITTELDRUCKER**
HEATING DEVICE FOR A FOOD EXTRUDER
APPAREIL DE CHAUFFAGE POUR UNE EXTRUDEUSE DE PRODUITS COMESTIBLES

(30) Priorität: 07.07.2015 DE 102015212644
(43) Veröffentlichungstag der Anmeldung: 16.05.2018
(73) Patentinhaber: BSH Hausgeräte GmbH, 81739 München (DE)
(72) Erfinder: CLEMENS, Kay-Uwe, 83527 Haag in Oberbayern (DE); GARBE, Thomas, 85521 Ottobrunn (DE); SCHUSTER, Lucia, 80336 München (DE); STADTMANN, Isabella, 89079 Ulm (DE)
(86) Internationale Anmeldenummer: PCT/EP2016/065650
(87) Internationale Veröffentlichungsnummer: WO 2017/005671

(56) Entgegenhaltungen:
- EP-B1- 1 718 419
- CN-A- 103 932 368
- DE-U1-202014 001 005
- US-A1- 2014 154 378
- US-B1- 6 658 995

## Beschreibung

Die Erfindung betrifft eine Vorrichtung zum selektiven Erhitzen bzw. Garen von Druckmasse für einen Nahrungsmitteldrucker.

Nahrungsmitteldrucker ermöglichen es einem Nutzer, eine Vielzahl von unterschiedlichen Nahrungsmitteln individuell und zuverlässig zuzubereiten. Beispielsweise können durch einen Nahrungsmitteldrucker unterschiedliche Backwaren individualisiert und nach Bedarf hergestellt werden.

Ein Garprozess (insbesondere ein Backprozess) in einem Nahrungsmitteldrucker kann einen relativ langen Zeitraum in Anspruch nehmen. Des Weiteren kann die individuelle Herstellung eines Nahrungsmittels einen relativ hohen Energieverbrauch verursachen. Dies führt dazu, dass Nahrungsmitteldrucker für bestimmte Anwendungen (z.B. für die schnelle Herstellung eines individuellen Gebäcks in einem "Gebäckautomaten") nur bedingt geeignet sind.

DE 10 2006 010312 A1 beschreibt ein System, bei dem ein Spritzgießcompounder dazu verwendet wird, ein Nahrungsmittel zu formen. DE 34 17 196 A1 beschreibt ein System, bei dem ein Extrudat in Formen gepresst wird, um geformte Lebensmittel herzustellen. DE 29 03 091 C1 beschreibt ein System zur Herstellung von netzwerkartigen Nahrungsmittelprodukten. Die o.g. Dokumente befassen sich nicht mit dem Garen von Nahrungsmitteln. CN 103932368 B offenbart ein Nahrungsmitteldrucker. US 6658995 B1 offenbart eine Gareinheit.

Das vorliegende Dokument befasst sich mit der technischen Aufgabe, eine Vorrichtung für einen Nahrungsmitteldrucker bereitzustellen, durch die ein Garprozess beschleunigt und der Energieverbrauch eines Garprozesses reduziert werden können.

Die Aufgabe wird durch die Gegenstände der unabhängigen Patentansprüche gelöst. Vorteilhafte Ausführungsformen werden u.a. in den abhängigen Patentansprüchen sowie nachfolgender Beschreibung beschrieben oder sind in der beigefügten Zeichnung dargestellt.

Gemäß einem Aspekt wird demnach eine Vorrichtung für ein System zur Herstellung eines Nahrungsmittels (z.B. für einen Nahrungsmitteldrucker) beschrieben. Das System bzw. der Nahrungsmitteldrucker können insbesondere zur Herstellung eines Gebäcks verwendet werden. Die Vorrichtung kann eingerichtet sein, Druckmasse, die zur Herstellung eines Nahrungsmittels verwendet wird, selektiv zu erhitzen bzw. zu garen. Die Vorrichtung umfasst eine bewegliche Düse, die eingerichtet ist, Druckmasse an unterschiedlichen Positionen auszutreiben, um eine räumliche Anordnung von Druckmasse für ein Nahrungsmittel herzustellen. Die Druckmasse weist typischerweise eine verformbare und/oder zähe Konsistenz auf. Insbesondere kann die Druckmasse einen Teig für ein Gebäck umfassen. Die Druckmasse kann in einem Mischbehälter und/oder in einer Kapsel bereitgestellt werden.

Die Vorrichtung umfasst weiter eine bewegliche Heizeinheit, die eingerichtet ist, Druckmasse, die aus der Düse ausgetrieben wurde, thermische Energie zuzuführen bzw. diese Druckmasse zu erwärmen bzw. zu erhitzen. Insbesondere kann die Heizeinheit dazu verwendet werden, ausgetriebene Druckmasse zu erhitzen, um die Druckmasse zu garen (insbesondere zu backen). Dabei ist die Heizeinheit typischerweise eingerichtet, zu einem bestimmten Zeitpunkt nur einen Bruchteil der räumliche Anordnung von Druckmasse, insbesondere nur einen örtlich lokalisierten Teil der räumliche Anordnung von Druckmasse, thermische Energie zuzuführen.

Die Vorrichtung umfasst außerdem eine Steuereinheit, die eingerichtet ist, ein Rezept für die Herstellung eines (bestimmten) Nahrungsmittels zu ermitteln. Das Rezept zeigt Positionsdaten mit einer Vielzahl von Positionen an, an denen von der Düse Druckmasse auszutreiben ist, um die räumliche Anordnung von Druckmasse für das (bestimmte) Nahrungsmittel herzustellen. Das Rezept kann weiter anzeigen, welcher Typ und/oder welche Menge von Druckmasse an einer Position auszutreiben sind. Des Weiteren ist die Steuereinheit eingerichtet, die bewegliche Düse und die bewegliche Heizeinheit in Abhängigkeit von den Positionsdaten zu bewegen.

Durch die Bewegung der Heizeinheit wird ein selektives Garen von ausgetriebener Druckmasse ermöglicht. Insbesondere wird es ermöglicht, in parallel laufenden Prozessen, Druckmasse über die Düse auszutreiben und bereits ausgetriebene Druckmasse zu garen (insbesondere zu backen). So können der Garprozess beschleunigt und der Energieverbrauch des Garprozesses reduziert werden.

Die bewegliche Heizeinheit kann eingerichtet sein, einer Bewegung der beweglichen Düse zu folgen. Insbesondere kann die Heizeinheit einer Bewegung der Düse lateral bzw. horizontal zu einer Fläche, auf die die Druckmasse aufgebracht wird, folgen. Dabei kann die Heizeinheit der Düse mit einem vordefinierten (lateralen) Abstand folgen. So kann erreicht werden, dass ausgetriebene Druckmasse zeitnah nach Aufbringen auf der Fläche gegart (insbesondere gebacken) werden kann. Es wird somit eine Beschleunigung des Garprozesses ermöglicht.

Die bewegliche Heizeinheit kann durch Befestigungsmittel mit der Düse verbunden sein. So kann in effizienter Weise gewährleistet werden, dass die Heizeinheit einen (typischerweise konstanten) Abstand zu der Düse aufweist. Des Weiteren kann so in effizienter Weise gewährleistet werden, dass Druckmasse in einem bestimmten zeitlichen Abstand nach Austrieb durch die Heizeinheit erhitzt wird.

Die bewegliche Heizeinheit kann einen Aktuator (z.B. einen Motor) umfassen, mit dem die Heizeinheit um die Düse herum bewegt werden kann. Die Steuereinheit kann eingerichtet sein, eine Bewegungsrichtung der Düse zu ermitteln (insbesondere auf Basis der Positionsdaten). Des Weiteren kann die Steuereinheit eingerichtet sein, den Aktuator in Abhängigkeit von der Bewegungsrichtung der Düse zu steuern. Dabei kann der Aktuator derart gesteuert werden, dass sich die Heizeinheit stets in Bewegungsrichtung hinter der Düse befindet, so dass zeitnah nach Austrieb von Druckmasse, die ausgetriebene Druckmasse erhitzt (und damit gegart) werden kann.

Die Heizeinheit kann derart in Bezug auf die Düse angeordnet sein und/oder (durch die Steuereinheit) angeordnet werden, dass die Heizeinheit einer Bewegung der Düse in einem vordefinierten Abstand folgt. Insbesondere kann die Heizeinheit derart bewegt werden, dass die Heizeinheit von der Düse wie ein Schlitten hinter der Düse her gezogen wird. Des Weiteren kann die Heizeinheit derart in Bezug auf die Düse angeordnet sein und/oder (durch die Steuereinheit) angeordnet werden, dass die Heizeinheit Druckmasse, die von der Düse ausgetrieben wurde, innerhalb einer bestimmten Zeitdauer nach Austrieb der Druckmasse thermische Energie zuführen kann. Die bestimmte Zeitdauer hängt dabei typischerweise von der Bewegungsgeschwindigkeit der Düse ab. Durch eine derartige Ausrichtung der Heizeinheit kann ein zeitnahes Garen von Druckmasse erreicht werden.

Die Heizeinheit kann ein oder mehrere der folgenden Heizelemente umfassen: eine Heizplatte, die erhitzt werden kann, und/oder eine Lichtquelle, die eingerichtet ist, elektromagnetische Strahlung im UV (Ultraviolett)- und/oder im IR(Infrarot)-Bereich auszustrahlen. Durch eine Heizplatte kann der Druckmasse thermische Energie über die Oberfläche der Druckmasse zugeführt werden. Andererseits kann der Druckmasse durch elektromagnetische Strahlung thermische Energie im Inneren der Druckmasse zugeführt werden. Es können somit durch die Heizeinheit unterschiedliche Verfahren zum Erhitzen der Druckmasse bereitgestellt werden. So kann der Garprozess bei Bedarf beschleunigt werden.

Ein Wärme ausstrahlendes Heizelement der Heizeinheit (insbesondere eine Heizplatte) kann eine Breite aufweisen, die gleich groß oder größer als eine Breite eines von der Düse ausgetriebenen Strangs von Druckmasse ist. Die Breite des Heizelements kann somit an die Breite eines zu garenden Strangs von Druckmasse angepasst sein. So kann ein selektives Erhitzen des ausgetriebenen Strangs von Druckmasse bewirkt werden, was insbesondere in Bezug auf den Energieverbrauch vorteilhaft ist. Des Weiteren weist das Heizelement typischerweise eine Länge auf, die größer als die Breite des Heizelements ist. Dabei kann die Länge des Heizelements von einer vordefinierten (ggf. maximalen) Bewegungsgeschwindigkeit der Düse abhängen. Typischerweise sollte die Länge des Heizelements mit steigender (maximaler) Bewegungsgeschwindigkeit der Düse steigen. So kann auch bei relativ hohen Bewegungsgeschwindigkeiten der Düse ein ausreichender Transfer von thermischer Energie gewährleistet werden.

Die Heizeinheit kann eine ringförmige Struktur aufweisen, welche die Düse einschließt. So kann in effizienter Weise erreicht werden, dass die Heizeinheit unabhängig von der Bewegungsrichtung der Düse Druckmasse direkt im Anschluss an den Austrieb erhitzen und damit garen kann.

Die Heizeinheit (insbesondere eine ringförmige Heizeinheit) kann eine Vielzahl von Heizsegmenten umfassen, die separat gesteuert werden können, um thermische Energie auf ausgetriebene Druckmasse zu übertragen. Die Heizsegmente können bei einer ringförmigen Heizeinheit um die Düse herum angeordnet sein. Die Steuereinheit kann eingerichtet sein, die Vielzahl von Heizsegmenten in Abhängigkeit von den Positionsdaten, insbesondere in Abhängigkeit von der Bewegungsrichtung der Düse, anzusteuern. Durch die selektive Ansteuerung von ein oder mehreren Heizsegmenten können ein selektives Erhitzen von Druckmasse und eine Reduzierung des Energieverbrauchs bewirkt werden.

Die Heizeinheit (insbesondere eine Heizplatte der Heizeinheit) kann eingerichtet sein, Luft in einer Umgebung der Heizeinheit zu erwärmen. Die Vorrichtung kann Mittel umfassen, um erwärmte Luft von der Heizeinheit zu ausgetriebener Druckmasse hinzubewegen. So kann der (selektive) Garprozess beschleunigt werden.

Die Heizeinheit kann einen (ggf. vertikalen) Abstand zu der ausgetriebenen Druckmasse aufweisen, der gleich wie oder größer als ein (ggf. vertikaler) Abstand der Düse zu der ausgetriebenen Druckmasse ist. Der Abstand kann dabei einem Abstand senkrecht bzw. vertikal zu der Fläche entsprechen, auf die die Druckmasse aufgebracht wurde. Die Heizeinheit kann derart durch die Steuereinheit bewegt werden, dass der (ggf. vertikale) Abstand die o.g. Bedingung erfüllt. Insbesondere können der Abstand der Heizeinheit und der Abstand der Düse gleich sein. So können ein möglichst effizienter Energieübertrag und eine Beschleunigung des Garprozesses bewirkt werden, ohne die räumliche Anordnung von Druckmasse zu berühren.

Erfindungsgemäß zeigt das Rezept ein oder mehrere Parameter für das Garen von Druckmasse zur Herstellung des (bestimmten) Nahrungsmittels an. Die ein oder mehreren Parameter umfassen ein oder mehrere von: eine Menge an thermischer Energie, die der Druckmasse zuzuführen ist; ein Zeitpunkt, an dem der Druckmasse thermische Energie zuzuführen ist; und/oder ein Verfahren bzw. ein Heizelement, mit dem der Druckmasse thermische Energie zuzuführen ist. Erfindungsgemäß ist die Steuereinheit eingerichtet, die Heizeinheit in Abhängigkeit von den ein oder mehreren Parametern zu steuern. So kann die Qualität des hergestellten Nahrungsmittels erhöht werden.

Die erfindungsgemäße Vorrichtung umfasst eine Gareinheit, die eingerichtet ist, der räumlichen Anordnung von Druckmasse als Gesamtheit thermische Energie zuzuführen. Insbesondere kann die Gareinheit einen Garraum umfassen, in dem sich die räumliche Anordnung von Druckmasse befindet. Der Garraum kann insgesamt erhitzt werden, um die räumliche Anordnung von Druckmasse als Gesamtheit zu garen. Durch die Bereitstellung einer Gareinheit (zum Erhitzen einer kompletten räumlichen Anordnung von Druckmasse) und einer Heizeinheit (zum selektiven Erhitzen von einem einzelnen Strang von Druckmasse aus der räumlichen Anordnung von Druckmasse) gemäß der Erfindung wird der Garprozess weiter beschleunigt. Erfindungsgemäß zeigt das Rezept Information zur Steuerung der Gareinheit an, und die Steuereinheit kann eingerichtet sein, die Gareinheit in Abhängigkeit von dem Rezept zu steuern.

Gemäß einem weiteren Aspekt wird ein System zur Herstellung eines Nahrungsmittels (insbesondere ein Nahrungsmitteldrucker) beschrieben, das die in diesem Dokument beschriebene Vorrichtung zum selektiven Erhitzen von Druckmasse umfasst.

Es ist zu beachten, dass die in diesem Dokument beschriebenen Vorrichtungen und Systeme sowohl alleine, als auch in Kombination mit anderen in diesem Dokument beschriebenen Vorrichtungen und Systemen verwendet werden können. Des Weiteren können jegliche Aspekte der in diesem Dokument beschriebenen Vorrichtungen und Systemen in vielfältiger Weise miteinander kombiniert werden. Insbesondere können die Merkmale der Ansprüche in vielfältiger Weise miteinander kombiniert werden.

Im Weiteren wird die Erfindung anhand von in der beigefügten Zeichnung dargestellten Ausführungsbeispielen näher beschrieben. Dabei zeigen:
- Figur 1: ein Blockdiagramm eines beispielhaften Systems zur Herstellung eines Nahrungsmittels; und
- Figuren 2a, 2b, 3a, 3b: Blockdiagramme von beispielhaften Vorrichtungen zum selektiven Erhitzen von Druckmasse für ein System zur Herstellung eines Nahrungsmittels.

Wie eingangs dargelegt, befasst sich das vorliegende Dokument mit der automatischen Herstellung von Nahrungsmitteln, wie z.B. der automatischen Herstellung eines Gebäcks. Insbesondere befasst sich das vorliegende Dokument mit einer effizienten Heizvorrichtung für ein System zur automatischen Herstellung von Nahrungsmitteln.

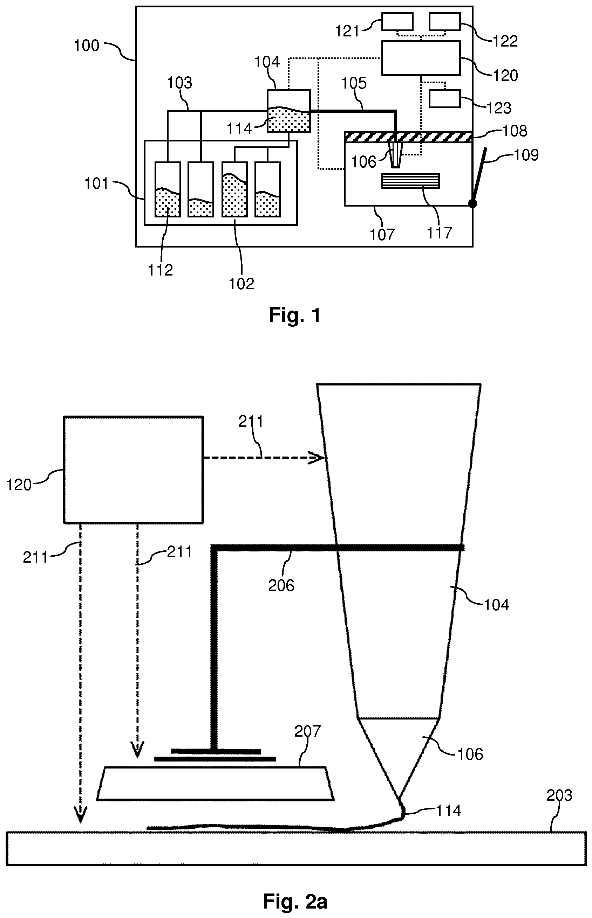

Fig. 1 zeigt ein Blockdiagramm eines beispielhaften Systems 100 zur Herstellung eines Nahrungsmittels 117 (z.B. zur Herstellung eines Gebäcks). Das System 100 kann ein oder mehrere Behälter 102 zur Aufnahme von einer entsprechenden Anzahl von Zutaten 112 umfassen. Die ein oder mehreren Behälter 102 können in das System 100 eingeführt werden (an dafür vorgesehene Positionen), und die Behälter 102 können bei Bedarf ausgetauscht werden. Beispielsweise kann ein Behälter 102 eine Kapsel oder eine Patrone umfassen. Die ein oder mehreren Behälter 102 können innerhalb des Systems 100 in einer Temperierungseinheit 101 (z.B. in einem Kühlschrank) angeordnet sein. Durch die Temperierung der ein oder mehreren Behälter 102 kann die Haltbarkeit der darin enthaltenen Zutaten 112 verlängert werden.

Die essbaren Zutaten 112 können zumindest teilweise eine formbare Konsistenz aufweisen. Die essbaren Zutaten 112 können z.B. zumindest teilweise in pürierter Form und/oder als formbarer Teig vorliegen. Des Weiteren können die Zutaten 112 unterschiedliche Komponenten eines zu erstellenden Nahrungsmittels 117 umfassen. Beispielsweise können die Zutaten 112 in einem ersten Behälter 102 einen Teig für ein Gebäck umfassen. Ein zweiter Behälter 102 kann z.B. eine Fruchtkomponente enthalten und ein dritter Behälter 102 kann z.B. eine Schokoladen-Komponente enthalten. Außerdem kann in einem der Behälter 102 Zucker als Zutat 112 bereitgestellt werden. So können durch das System 100 unterschiedliche Varianten eines Gebäcks hergestellt werden (z.B. mit unterschiedlichem Zuckergehalt, mit oder ohne Schokoladengeschmack, mit oder ohne Fruchtgeschmack, etc.).

Die ein oder mehreren Behälter 102 können über Leitungen 103 mit einer Mischeinheit 104 verbunden sein. In der Mischeinheit 104 können ein oder mehrere der Zutaten 112 aus den ein oder mehreren Behältern 102 gemischt werden, um eine Druckmasse 114 für die Herstellung des Nahrungsmittels 117 zu erzeugen. Die Druckmasse 114 kann über eine Leitung 105 zu einer Düse 106 befördert werden, wobei die Düse 106 eingerichtet ist, die Druckmasse 114 an bestimmten Positionen auszustoßen bzw. auszutreiben, um eine räumliche Anordnung von Druckmasse zu erstellen. Beispielsweise können schichtweise unterschiedliche Druckmassen 114 ausgestoßen werden, um schichtweise eine räumliche Anordnung aus den unterschiedlichen Druckmassen 114 zu erstellen. Die Düse 106 kann zu diesem Zweck an einer Schiene 108 beweglich angeordnet sein, so dass die Düse 106 an unterschiedliche Positionen bewegt werden kann, und an unterschiedlichen Positionen Druckmasse 114 ausstoßen kann.

Die anhand der Druckmasse 114 hergestellte räumliche Anordnung kann durch eine Gareinheit 107 als Ganzes gegart werden, um ein fertig gegartes (z.B. ein gebackenes) Nahrungsmittel 117 zu erstellen. Die Gareinheit 107 kann einen thermischen Ofen, einen Mikrowellenofen, eine Dünsteinheit, einen Grill, und/oder eine Pfanne umfassen. In dem in Fig. 1 dargestellten Beispiel wird die räumliche Anordnung von Druckmasse 114 direkt durch die Düse 106 innerhalb der Gareinheit 107 "gedruckt". Dies ist vorteilhaft, da so der Aufwand für den Transport der räumlichen Anordnung zu der Gareinheit 107 reduziert werden kann.

Das fertig gegarte Nahrungsmittel 117 kann über eine Ausgabe 109 des Systems 100 an einen Nutzer ausgegeben werden. In dem dargestellten Beispiel umfasst die Gareinheit 107 eine Klappe 109, durch die ein Nutzer das Nahrungsmittel 117 aus der Gareinheit 107 entnehmen kann.

Das System 100 umfasst eine Steuereinheit 120, die eingerichtet ist, ein Rezept für ein zu erstellenden Nahrungsmittel 117 zu ermitteln. Beispielsweise kann die Steuereinheit 120 dazu auf eine Rezept-Datenbank auf einer Speichereinheit 123 des Systems 100 zugreifen. Alternativ oder ergänzend kann die Steuereinheit 120 über eine Kommunikationseinheit 121 auf eine externe Rezept-Datenbank zugreifen, die auf einem externen Server gespeichert ist. Die Kommunikationseinheit 121 kann eingerichtet sein, über ein drahtloses und/oder drahtgebundenes Netzwerk mit dem externen Server zu kommunizieren. Alternativ oder ergänzend kann das Rezept über eine Benutzerschnittstelle 122 (z.B. über einen berührungsempfindlichen Bildschirm) des Systems 100) der Steuereinheit 120 bereitgestellt bzw. ausgewählt werden.

Die Steuereinheit 120 ist weiter eingerichtet, in Abhängigkeit von dem Rezept bestimmte Mengen von Zutaten 112 aus den Behältern 102 (ggf. über die Mischeinheit 104) auf die räumliche Anordnung von Druckmasse 114 bzw. auf das herzustellende Nahrungsmittel 117 aufzubringen. Des Weiteren kann die Steuereinheit 120 eingerichtet sein, die Gareinheit 107 des Systems 100 in Abhängigkeit von dem Rezept anzusteuern, um die räumliche Anordnung von Druckmasse 114 zumindest teilweise zu garen.

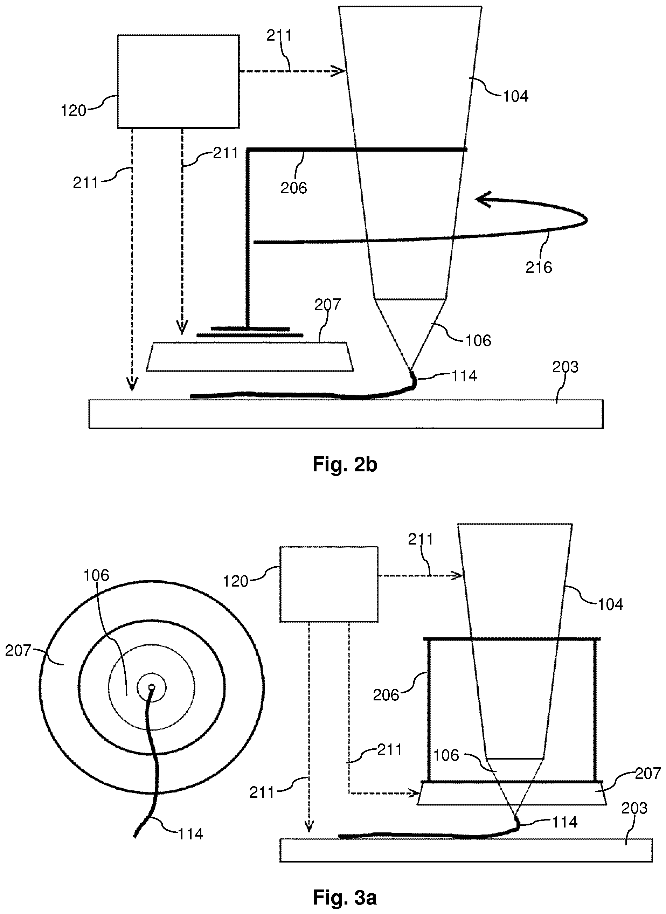

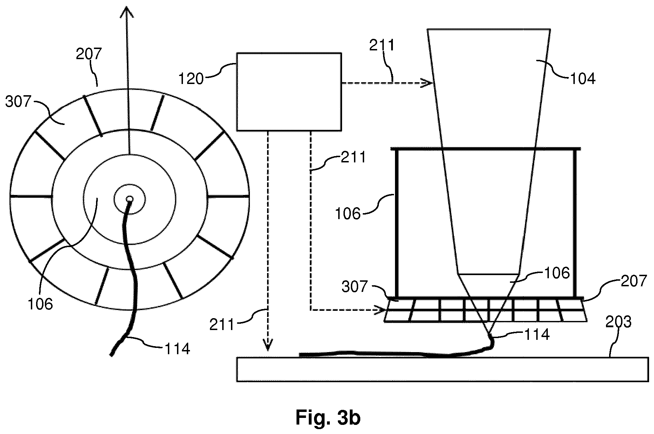

Das Garen (insbesondere das Backen) einer kompletten räumlichen Anordnung von Druckmasse 114 in einer Gareinheit 107 kann relativ viel Zeit in Anspruch nehmen. Des Weiteren kann das zeitgleiche Garen von unterschiedlichen Druckmassen 114 in einer Gareinheit 107 zu unzureichenden Ergebnissen führen. In den Figuren 2 und 3 werden beispielhafte Heizeinheiten für ein System 100 zur Herstellung eines Nahrungsmittels 117 beschrieben, durch die ein beschleunigtes und/oder ein individualisiertes Garen von Druckmasse 114 ermöglicht wird. Die in den Figuren 2 und 3 dargestellten Heizeinheiten können ggf. in Kombination mit einer Gareinheit 107 verwendet werden.

Fig. 2a zeigt eine Düse 106 und eine oberhalb der Düse 106 angeordnete Mischeinheit 104, welche die Druckmasse 114 umfasst, die über die Düse 106 extrudiert bzw. ausgetrieben werden kann. In dem in Fig. 2a dargestellten Beispiel kann die Düse 106 gemeinsam mit der Mischeinheit 104 entlang einer Schiene 108 (nicht dargestellt) bewegt werden, um auf einer Bodenplatte 203 eine räumliche Anordnung von Druckmasse 114 zu erzeugen.

Fig. 2a zeigt weiter eine Heizeinheit 207 (z.B. eine Heizplatte), die eingerichtet ist, sich in Abhängigkeit von der Position der Düse 106 zu bewegen. Insbesondere kann die Heizeinheit 207, wie in Fig. 2a dargestellt, über Befestigungsmittel 206 mit der Düse 106 bzw. mit einem Druckkopf, der die Düse 106 umfasst, verbunden sein, so dass die Heizeinheit 207 (in Bewegungsrichtung der Düse 106) hinter der Düse 106 hergeführt werden kann. So kann erreicht werden, dass Druckmasse 114, welche von der Düse 106 extrudiert wurde, unmittelbar nach dem Extrudieren thermische Energie zugeführt wird. Insbesondere kann durch eine aufgeheizte Heizeinheit 207 die extrudierte bzw. ausgetriebene Druckmasse 114 selektiv gebacken werden.

Die Steuereinheit 120 kann eingerichtet sein, die Heizeinheit 207 über ein Steuersignal 211 zu steuern. Insbesondere kann eine Menge an thermischer Energie, die von der Heizeinheit 207 generiert wird, bzw. eine Temperatur der Heizeinheit 207 verändert werden. Die Heizeinheit 207 kann z.B. in Abhängigkeit von einem Typ und/oder in Abhängigkeit von einer Menge an extrudierter Druckmasse 114 gesteuert werden. So kann mittels einer, der Düse 106 nachgelagerten, Heizeinheit 207 ein schnelles und gezieltes Garen (insbesondere Backen) von Druckmasse 114 erreicht werden.

Fig. 2b zeigt eine Heizeinheit 207, die um die Düse 106 bzw. um den Druckkopf gedreht werden kann (siehe Pfeil 216). Durch eine geeignete Drehung der Heizeinheit 207 kann erreicht werden, dass die Heizeinheit 207 auch bei Richtungsänderungen der Düse 106, die extrudierte Druckmasse 114 direkt im Anschluss an das Extrudieren der Druckmasse 114 selektiv garen bzw. backen kann.

Fig. 3a zeigt eine Draufsicht (linke Seite) und eine Seitenansicht (rechte Seite) einer ringförmigen Heizeinheit 207, die um die Düse 106 herum angeordnet ist. Durch die in Fig. 3a dargestellte Anordnung kann in effizienter Weise gewährleistet werden, dass Druckmasse 114 unmittelbar nach Extrusion von der Heizeinheit 207 gegart (insbesondere gebacken) werden kann.

Die in Fig. 3b dargestellte Heizeinheit 207 umfasst darüber hinaus eine Vielzahl von Heizsegmenten 307, die jeweils einzeln von der Steuereinheit 120 angesteuert werden können. Insbesondere können die Heizsegmente 307 in Abhängigkeit von einer Bewegungsrichtung der Düse 106 angesteuert werden. So kann erreicht werden, dass ggf. nur die ein oder mehreren Heizsegmente 307 erhitzt werden, unter denen sich zu einem bestimmten Zeitpunkt extrudierte Druckmasse 114 befindet.

Es wird somit eine Heizeinheit 207 für ein System 100 zur Herstellung eines Nahrungsmittels 117 (insbesondere für einen Nahrungsmitteldrucker) beschrieben. Dabei befindet sich die Heizeinheit 207 unmittelbar neben der Düse 106, durch die Druckmasse 114 auf das zu erstellende Nahrungsmittel 117 herausgepresst wird. Die Druckmasse 114 kann ggf. direkt aus einer Kapsel (z.B. aus einer Kapsel mit einer fertigen Teigmasse) bezogen werden. Um zu gewährleisten, dass die Heizeinheit 207 extrudierte Druckmasse 114 zeitnah nach der Extrusion garen (insbesondere backen) kann, kann die Heizeinheit 207 über Befestigungsmittel 206 fest mit einer Aufnahmevorrichtung für die Düse 106 verbunden sein. So wird sichergestellt, dass die Heizeinheit 207 dieselben Bewegungen durchführt, wie die Düse 106. Somit kann der aus der Düse 106 extrudierte und auf einer Bodenplatte 203 abgelegte Strang von Druckmasse 114 unmittelbar nach Extrusion selektiv erhitzt und damit gebacken werden.

Die Heizeinheit 207 kann als Schlitten betrachtet werden, welcher der Düse 106 nachgelagert ist. Die Düse 106 bewegt sich vorneweg, und die Heizeinheit 207 folgt der Düse 106 (entsprechend der Bewegungsrichtung der Düse 106). Dabei befindet sich die Heizeinheit 207 möglichst nahe oberhalb der extrudierten Druckmasse 114, ohne die Druckmasse 114 zu berühren. Dadurch wird ein hoher Wärmeübertragung ermöglicht.

Die Heizeinheit 207 und/oder das System 100 können Ventilationsmittel (nicht gezeigt) umfassen, die eingerichtet sind, einen Luftsog von der Heizeinheit 207 weg nach unten und/oder zur Seite (z.B. nach hinten) zu generieren. So kann der Wärmeübertrag von der Heizeinheit 207 auf die Druckmasse 114 verbessert werden. Die Ventilationsmittel (insbesondere ein Saugsystem und/oder ein Unterdrucksystem) können sich in der Bodenplatte 203 und/oder in einem hinteren Teil des Systems 100 befinden. So kann ein Luftsog zur Bodenplatte 203 und/oder zur Hinterseite des Systems 100 bewirkt werden, der die erwärmte Luft der Heizeinheit 207 zu der Druckmasse 114 hin transportiert.

Wie bereits oben dargelegt, kann alternativ oder ergänzend zur Erwärmung über die Heizeinheit 207 die räumliche Anordnung von Druckmasse 114 insgesamt durch eine Gareinheit 107 des Systems 100 gegart werden. Insbesondere kann die Luft in einem Garraum erhitzt werden. Des Weiteren kann die Bodenplatte 203 erhitzt werden. Es kann somit eine Vielzahl von Möglichkeiten bereitgestellt werden, um die extrudierte Druckmasse 114 zu garen.

Die Heizeinheit 207 kann eine Heizplatte umfassen, die erwärmt werden kann. Dabei ist eine Heizplatte der Heizeinheit 207 typischerweise mindestens so breit wie ein extrudierter Strang von Druckmasse 114. Des Weiteren weist die Heizplatte typischerweise eine größere Länge als Breite auf. Durch die Länge der Heizplatte kann ein Zeitraum für das Erwärmen von Druckmasse 114 eingestellt werden.

Die Heizeinheit 207 (insbesondere eine Heizplatte der Heizeinheit 207) ist typischerweise kleiner als die zu garende räumliche Anordnung von Druckmasse 114. Insbesondere kann die räumliche Anordnung von Druckmasse 114 einen ersten Bereich der Bodenplatte 203 einnehmen. Die Heizeinheit 207 (insbesondere die Heizplatte der Heizeinheit 207) kann derart sein, dass sie nur einen Bruchteil des ersten Bereichs abdeckt (z.B. 30%, 20%, 10% oder weniger). So kann ein selektives und gezieltes Erhitzen von Druckmasse 114 bewirkt werden.

Die Heizplatte einer Heizeinheit 207 kann eine Carbon-Nano-Tubes Beschichtung aufweisen, um Heizleistung für das Garen von Druckmasse 114 bereitzustellen. Des Weiteren kann die Heizplatte eine Metallplatte umfassen. Alternativ oder ergänzend kann die Heizeinheit 207 eine Lichtquelle im UV- und/oder IR- Bereich umfassen, um in präziser Weise Heizleistung für das Garen von Druckmasse 114 bereitzustellen. Dabei kann als Lichtquelle ggf. ein Laser verwendet werden, mit dem eine relativ hohe Fokussierung und/oder Intensität von Heizleistung ermöglicht wird.

Die Heizplatte einer Heizeinheit 207 kann eine ebene, der Druckmasse 114 zugewandte, Oberfläche aufweisen. Alternativ kann die Oberfläche der Heizplatte an eine Form des extrudierten Strangs von Druckmasse 114 angepasst sein. Insbesondere kann die Oberfläche der Heizplatte zur Druckmasse 114 hin konkav sein.

Die Heizeinheit 207 kann somit eine Vielzahl von unterschiedlichen Heizelementen umfassen, durch die der Druckmasse 114 in unterschiedlicher Weise thermische Energie zugeführt wird. Insbesondere kann die Heizeinheit 207 ein Heizelement umfassen (z.B. einen UV- bzw. IR-Laser), durch das thermische Energie in das Innere der Druckmasse 114 geführt werden kann. Des Weiteren kann die Heizeinheit 207 ein Heizelement (z.B. eine thermische Heizplatte) umfassen, durch das thermische Energie an die Oberfläche der Druckmasse 114 geführt werden kann. Durch die Kombination von verschiedenen Heizelementen kann ein beschleunigtes und qualitativ hochwertiges Garen bewirkt werden.

Wie in den Figuren 2 und 3 dargestellt, kann die Heizeinheit 207 über Befestigungsmittel 206 direkt an einer Extrusionseinheit (insbesondere an einer Düse 106) des Systems 100 angebracht sein. So kann die Heizeinheit 207 (insbesondere eine Heizplatte der Heizeinheit 207) die exakten Bewegungen der Düse 106 nachfahren. Des Weiteren kann die Heizeinheit 207 auf Höhe der Öffnung der Düse 106 angeordnet sein, um möglichst energiesparend und in kürzester Zeit eine Druckmasse 114 zu garen.

In dem Beispiel aus Fig. 2a ist die Heizeinheit 207 fest mit der Extrusionseinheit (d.h. mit der Düse 106) verbunden. Die Heizplatte der Heizeinheit 207 kann gleichmäßig erhitzt werden. In dem Beispiel von Fig. 2b ist die Heizeinheit 207 beweglich und kann in Abhängigkeit von der Bewegung der Düse 106 um die Düse 106 rotieren. Die Bewegungen der Düse 106 und der Heizeinheit 207 sind dabei von einer vordefinierten Geometrie des zu erstellenden Nahrungsmittels 117 abhängig. Durch eine geeignete Bewegung der Heizeinheit 207 kann gewährleistet werden, dass die Heizeinheit 207 stets der Düse 106 in Bewegungsrichtung der Düse 106 nachgelagert ist.

In dem Beispiel von Fig. 3a ist die Heizeinheit 207 nicht beweglich und fest an der Extrusionseinheit (insbesondere an der Düse 106) befestigt. Die Heizeinheit 207 ist jedoch kreisförmig um die Düse 106 herum angebracht, und ermöglicht somit eine stets nachgelagerte Erwärmung der extrudierten Druckmasse 114. Eine Heizplatte der Heizeinheit 207 kann dabei gleichmäßig beheizt werden.

Die in Fig. 3b dargestellte Heizeinheit 207 umfasst einzelne Heizsegmente 307, die kreisförmig um die Düse 106 angeordnet sind. Die Heizsegmente 307 können einzeln angesteuert und erhitzt werden. Bewegt sich beispielsweise die Düse in die durch den Pfeil angezeigte Richtung, so wird das dazu passende Heizsegment 307 (welche dem Pfeil gegenüber liegt) erhitzt werden. Diese Auswahl und Ansteuerung von ein oder mehreren Heizsegmenten 307 erfolgt in Abhängigkeit von der Bewegungsrichtung der Düse 106. Dabei hängt die Bewegungsrichtung der Düse 106 von der Geometrie des zu erstellenden Nahrungsmittels 117 ab.

Durch die in diesem Dokument beschriebene Heizeinheit 207 wird eine unmittelbare und selektive Erhitzung eines extrudierten Strangs von Druckmasse 114 ermöglicht. Es können somit relativ geringe Mengen von Druckmasse 114 selektiv erhitzt werden. Des Weiteren wird eine Parallelisierung von Extrusion und Garprozess ermöglicht. Dies führt insgesamt zu einer Beschleunigung des Garprozesses und zu einer Reduzierung des Energieverbrauchs. Durch eine physikalische Kopplung mit der Düse 106 kann die Heizeinheit 207 relativ nah an Druckmasse 114 herangeführt werden, ohne diese jedoch zu berühren. So können der Energieverbrauch des Garprozesses weiter reduziert und die Garzeit weiter verkürzt werden.

## Patentansprüche

1. Vorrichtung für ein System (100) zur Herstellung eines Nahrungsmittels (117), wobei die Vorrichtung umfasst,
- eine bewegliche Düse (106), die eingerichtet ist, Druckmasse (114) an unterschiedlichen Positionen auszutreiben, um eine räumliche Anordnung von Druckmasse (114) für ein Nahrungsmittel (117) herzustellen;
- eine bewegliche Heizeinheit (207), die eingerichtet ist, Druckmasse (114), die aus der Düse (106) ausgetrieben wurde, thermische Energie zuzuführen; und
- eine Steuereinheit (120), die eingerichtet ist,
- ein Rezept für die Herstellung eines Nahrungsmittels (117) zu ermitteln, wobei das Rezept Positionsdaten mit einer Vielzahl von Positionen anzeigt, an denen von der Düse (106) Druckmasse (114) auszutreiben ist, um die räumliche Anordnung von Druckmasse (114) für das Nahrungsmittel (117) herzustellen; und
- die bewegliche Düse (106) und die bewegliche Heizeinheit (207) in Abhängigkeit von den Positionsdaten zu bewegen,
**dadurch gekennzeichnet, dass**
- die Vorrichtung eine Gareinheit (107) mit einem Garraum umfasst, die eingerichtet ist, der räumlichen Anordnung von Druckmasse (114) als Gesamtheit thermische Energie zuzuführen;
- das Rezept Information zur Steuerung der Gareinheit (107) und ein oder mehrere Parameter für das Garen von Druckmasse (114) zur Herstellung des Nahrungsmittels (117) anzeigt;
- die ein oder mehreren Parameter ein oder mehrere umfassen von: eine Menge an thermischer Energie, die der Druckmasse (114) zuzuführen ist; ein Zeitpunkt, an dem der Druckmasse (114) thermische Energie zuzuführen ist; und/oder ein Verfahren, mit dem der Druckmasse (114) thermische Energie zuzuführen ist; und
- die Steuereinheit (120) eingerichtet ist, die Gareinheit (107) in Abhängigkeit von dem Rezept und die Heizeinheit (207) in Abhängigkeit von den ein oder mehreren Parametern zu steuern.

2. Vorrichtung gemäß Anspruch 1, wobei die bewegliche Heizeinheit (207) eingerichtet ist, einer Bewegung der beweglichen Düse (106), insbesondere einer Bewegung lateral zu einer Fläche (203), auf die die Druckmasse (114) aufgebracht wird, zu folgen.

3. Vorrichtung gemäß einem der vorhergehenden Ansprüche, wobei die bewegliche Heizeinheit (207) durch Befestigungsmittel (206) mit der Düse (106) verbunden ist.

4. Vorrichtung gemäß einem der vorhergehenden Ansprüche, wobei
- die bewegliche Heizeinheit (207) einen Aktuator umfasst, mit dem die Heizeinheit (207) um die Düse (106) herum bewegt werden kann; und
- die Steuereinheit (120) eingerichtet ist,
- eine Bewegungsrichtung der Düse (106) zu ermitteln; und
- den Aktuator in Abhängigkeit von der Bewegungsrichtung der Düse (106) zu steuern.

5. Vorrichtung gemäß einem der vorhergehenden Ansprüche, wobei die Heizeinheit (207) derart in Bezug auf die Düse (106) angeordnet ist und/oder angeordnet werden kann, dass die Heizeinheit (207) einer Bewegung der Düse (106) in einem vordefinierten Abstand folgt.

6. Vorrichtung gemäß einem der vorhergehenden Ansprüche, wobei die Heizeinheit (207) derart in Bezug auf die Düse (106) angeordnet ist und/oder angeordnet werden kann, dass die Heizeinheit (207) Druckmasse (114), die von der Düse ausgetrieben wurde, innerhalb von einer bestimmten Zeitdauer nach Austrieb der Druckmasse (114) thermische Energie zuführen kann; wobei die bestimmte Zeitdauer von einer Bewegungsgeschwindigkeit der Düse (106) abhängt.

7. Vorrichtung gemäß einem der vorhergehenden Ansprüche, wobei die Heizeinheit (207) ein oder mehrere der folgenden Heizelemente umfasst,
- eine Heizplatte, die erhitzt werden kann; und/oder
- eine Lichtquelle, die eingerichtet ist, elektromagnetische Strahlung im UV- und/oder im IR-Bereich auszustrahlen.

8. Vorrichtung gemäß einem der vorhergehenden Ansprüche, wobei ein, Wärme ausstrahlendes, Heizelement der Heizeinheit (207)
- eine Breite aufweist, die gleich groß oder größer als eine Breite eines von der Düse (106) ausgetriebenen Strangs von Druckmasse (114) ist; und
- eine Länge aufweist, die größer als die Breite des Heizelements ist.

9. Vorrichtung gemäß einem der vorhergehenden Ansprüche, wobei die Heizeinheit (207) eine ringförmige Struktur aufweist, welche die Düse (106) einschließt.

10. Vorrichtung gemäß einem der vorhergehenden Ansprüche, wobei
- die Heizeinheit (207) eine Vielzahl von Heizsegmenten (307) umfasst, die separat gesteuert werden können, um thermische Energie auf ausgetriebene Druckmasse (114) zu übertragen; und
- die Steuereinheit (120) eingerichtet ist, die Vielzahl von Heizsegmenten (307) in Abhängigkeit von den Positionsdaten, insbesondere in Abhängigkeit von einer Bewegungsrichtung der Düse (106), anzusteuern.

11. Vorrichtung gemäß einem der vorhergehenden Ansprüche, wobei
- die Heizeinheit (207) eingerichtet ist, Luft in einer Umgebung der Heizeinheit (207) zu erwärmen; und
- die Vorrichtung Mittel umfasst, um erwärmte Luft von der Heizeinheit (207) zu ausgetriebener Druckmasse (114) hinzubewegen.

12. Vorrichtung gemäß einem der vorhergehenden Ansprüche, wobei die Heizeinheit (207) einen vertikalen Abstand zu der ausgetriebenen Druckmasse (114) aufweist, der gleich wie oder größer als ein vertikaler Abstand der Düse (106) zu der ausgetriebenen Druckmasse (114) ist.

13. Vorrichtung gemäß einem der vorhergehenden Ansprüche, wobei die Druckmasse (114)
- eine verformbare und/oder zähe Konsistenz aufweist; und/oder
- einen Teig für ein Gebäck umfasst.

## Claims

1. Device for a system (100) for producing a foodstuff (117), wherein the device comprises
- a movable nozzle (106), which is configured to expel pressed mass (114) at various positions, in order to produce a spatial arrangement of pressed mass (114) for a foodstuff (117);
- a movable heating unit (207), which is configured to supply thermal energy to a pressed mass (114), which has been expelled from the nozzle (106); and
- a control unit (120), which is configured,
- to determine a recipe for producing a foodstuff (117), wherein the recipe displays position data with a plurality of positions, at which the pressed mass (114) is to be expelled from the nozzle (106), in order to produce the spatial arrangement of pressed mass (114) for the foodstuff (117); and
- to move the movable nozzle (106) and the movable heating unit (207) as a function of the position data,
**characterised in that**
the device comprises a cooking unit (107) with a cooking chamber, which is configured to supply thermal energy to the spatial arrangement of pressed mass (114) as a whole;
- the recipe displays information for controlling the cooking unit (107) and one or more parameters for the cooking of pressed mass (114) for producing the foodstuff (117);
- the one or more parameters comprise one or more of: a quantity of thermal energy, which is to be supplied to the pressed mass (114); a time instant at which thermal energy is to be supplied to the pressed mass (114); and/or a method with which thermal energy is to be supplied to the pressed mass (114); and
- the control unit (120) is configured to control the cooking unit (207) as a function of the recipe and to control the heating unit (107) as a function of the one or more parameters.

2. Device according to claim 1, wherein the movable heating unit (207) is configured to follow a movement of the movable nozzle (106), in particular a movement lateral to a surface (203), to which the pressed mass (114) is applied.

3. Device according to one of the preceding claims, wherein the movable heating unit (207) is connected to the nozzle (106) by means of fastening means (206).

4. Device according to one of the preceding claims, wherein
- the movable heating unit (207) comprises an actuator, with which the heating unit (207) can be moved around the nozzle (106); and
- the control unit (120) is configured
- to determine a direction of movement of the nozzle (106), and
- to control the actuator as a function of the direction of movement of the nozzle (106).

5. Device according to one of the preceding claims, wherein the heating unit (207) is and/or can be arranged in relation to the nozzle (106) such that the heating unit (207) follows a movement of the nozzle (106) at a predefined distance.

6. Device according to one of the preceding claims, wherein the heating unit (207) is and/or can be arranged in relation to the nozzle (106) such that the heating unit (207) can supply thermal energy to the pressed mass (114), which has been expelled from the nozzle, within a specific period of time after expulsion of the pressed mass (114); wherein the specific period of time depends on a speed of movement of the nozzle (106).

7. Device according to one of the preceding claims, wherein the heating unit (207) comprises one or more of the following heating elements:
- a heating plate, which can be heated, and/or
- a light source, which is configured to emit electromagnetic radiation in the UV and/or in the IR range.

8. Device according to one of the preceding claims, wherein a heating element of the heating unit (207) which emits heat
- has a width which is equal to or greater than a width of a strand of pressed mass (114) expelled by the nozzle (106); and
- has a length which is greater than the width of the heating element.

9. Device according to one of the preceding claims, wherein the heating unit (207) has a ring-shaped structure, which encloses the nozzle (106).

10. Device according to one of the preceding claims, wherein
- the heating unit (207) comprises a plurality of heating segments (307), which can be controlled separately in order to transmit thermal energy to expelled pressed mass (114); and
- the control unit (120) is configured to activate the plurality of heating segments (307) as a function of the position data, in particular as a function of a direction of movement of the nozzle (106).

11. Device according to one of the preceding claims, wherein
- the heating unit (207) is configured to heat air in an area surrounding the heating unit (207); and
- the device comprises means of moving heated air from the heating unit (207) to expelled pressed mass (114).

12. Device according to one of the preceding claims, wherein the heating unit (207) has a vertical distance from the expelled pressed mass (114), which is equal to or greater than a vertical distance between the nozzle (106) and the expelled pressed mass (114).

13. Device according to one of the preceding claims, wherein the pressed mass (114)
- has a deformable and/or viscous consistency, and/or
- comprises a dough for a pastry.

## Revendications

1. Dispositif pour un système (100) de production d'une denrée alimentaire (117), dans lequel le dispositif comprend,
- une buse mobile (106) aménagée afin d'expulser la masse comprimée (114) en diverses positions, afin d'établir une disposition spatiale de la masse comprimée (114) pour une denrée alimentaire (117) ;
- une unité de chauffage mobile (207) aménagée afin d'alimenter en énergie thermique la masse comprimée (114) expulsée de la buse (106) ; et
- une unité de commande (120) aménagée
∘ afin de déterminer une recette pour la production d'une denrée alimentaire (117), dans lequel la recette affiche des données de position avec une pluralité de positions auxquelles la masse comprimée (114) est à expulser de la buse (106) afin d'établir la disposition spatiale de la masse comprimée (114) pour la denrée alimentaire (117) ; et
∘ afin de déplacer la buse mobile (106) et l'unité de chauffage mobile (207) en fonction des données de position, **caractérisé en ce que**
- le dispositif comprend une unité de cuisson (107) avec un espace de cuisson, aménagée afin d'alimenter en énergie thermique la disposition spatiale de masse comprimée (114) en tant qu'unité globale ;
- la recette affiche une information pour le pilotage de l'unité de cuisson (107) et un ou plusieurs paramètre(s) pour la cuisson de la masse comprimée (114) en vue de la production de la denrée alimentaire (117) ;
- le ou les paramètre(s) comprennent un ou plusieurs éléments parmi : une quantité d'énergie thermique à affecter à la masse comprimée (114) ; un instant auquel l'énergie thermique est à affecter à la masse comprimée (114) et/ou un procédé selon lequel l'énergie thermique est à affecter à la masse comprimée (114) ; et
- l'unité de commande (120) est aménagée afin de commander l'unité de cuisson (107) en fonction de la recette et l'unité de chauffage (207) en fonction du ou des paramètre(s).

2. Dispositif selon la revendication 1, dans lequel l'unité de chauffage mobile (207) est aménagée afin de suivre un déplacement de la buse mobile (106), en particulier un déplacement latéral par rapport à une surface (203) sur laquelle la masse comprimée (114) est apposée.

3. Dispositif selon l'une des revendications précédentes, dans lequel l'unité de chauffage mobile (207) est reliée à la buse (106) via des moyens de fixation (206).

4. Dispositif selon l'une des revendications précédentes, dans lequel
- l'unité de chauffage mobile (207) comprend un actionneur avec lequel l'unité de chauffage (207) peut être déplacée autour de la buse (106) ; et
- l'une unité de commande (120) est aménagée
- afin de déterminer un sens de déplacement de la buse (106) ; et
- afin de commander l'actionneur en fonction du sens de déplacement de la buse (106).

5. Dispositif selon l'une des revendications précédentes, dans lequel l'unité de chauffage (207) est disposée et/ou peut être disposée de telle façon par rapport à la buse (106) que l'unité de chauffage (207) suit un déplacement de la buse (106) selon un écartement prédéfini.

6. Dispositif selon l'une des revendications précédentes, dans lequel l'unité de chauffage (207) est disposée et/ou peut être disposée de telle façon par rapport à la buse (106) que l'unité de chauffage (207) est en mesure d'alimenter en énergie thermique la masse comprimée (114) expulsée de la buse pendant un laps de temps déterminé après l'expulsion de la masse comprimée (114), le laps de temps déterminé dépendant d'une vitesse de déplacement de la buse (106).

7. Dispositif selon l'une des revendications précédentes, dans lequel l'unité de chauffage (207) comprend un ou plusieurs des éléments chauffants suivants,
- une plaque chauffante pouvant être chauffée ; et/ou
- une source lumineuse aménagée afin d'émettre un rayonnement électromagnétique dans la plage UV et/ou IR.

8. Dispositif selon l'une des revendications précédentes dans lequel un élément chauffant émettant de la chaleur de l'unité de chauffage (207)
- présente une largeur égale ou supérieure à une largeur d'un cordon de masse comprimée (114) expulsé par la buse (106) ; et
- présente une longueur supérieure à la largeur de l'élément chauffant.

9. Dispositif selon l'une des revendications précédentes, dans lequel l'unité de chauffage (207) présente une structure annulaire qui inclut la buse (106).

10. Dispositif selon l'une des revendications précédentes, dans lequel
- l'unité de chauffage (207) comprend une pluralité de segments chauffants (307) pouvant être commandés séparément, afin de transmettre l'énergie thermique sur la masse comprimée (114) expulsée ; et
- l'unité de commande (120) est aménagée afin de commander la pluralité de segments chauffants (307) en fonction des données de position, en particulier en fonction d'un sens de déplacement de la buse (106).

11. Dispositif selon l'une des revendications précédentes, dans lequel
- l'unité de chauffage (207) est aménagée afin de chauffer l'air dans un voisinage de l'unité de chauffage (207) ; et
- le dispositif comprend des moyens afin de déplacer l'air chauffé de l'unité de chauffage (207) vers la masse comprimée (114) expulsée.

12. Dispositif selon l'une des revendications précédentes, dans lequel l'unité de chauffage (207) présente un écartement vertical par rapport à la masse comprimée (114) expulsée, qui est égal ou supérieur à un écartement vertical de la buse (106) par rapport à la masse comprimée (114) expulsée.

13. Dispositif selon l'une des revendications précédentes, dans lequel la masse comprimée (114)
- présente une consistance déformable et/ou dure ; et/ou
- comprend une pâte pour une pâtisserie.
